# EUROPÄISCHE PATENTSCHRIFT

(11) **EP 1 602 797 B1**
(45) Veröffentlichungstag und Bekanntmachung des Hinweises auf die Patenterteilung: **12.05.2010**
(21) Anmeldenummer: 05011468.5
(22) Anmeldetag: 27.05.2005
(51) Int. Cl.: E05F 15/20, E05F 15/00

(54) **Kraftfahrzeug**
Vehicle
Véhicule

(30) Priorität: 04.06.2004 DE 102004027457
(43) Veröffentlichungstag der Anmeldung: 07.12.2005
(73) Patentinhaber: AUDI AG, 85045 Ingolstadt (DE)
(72) Erfinder: Wüst, Sabine, 85049 Ingolstadt (DE); Pietzsch, Catrin Elisa, 85051 Ingolstadt (DE)
(74) Vertreter: Thielmann, Frank

(56) Entgegenhaltungen:
- DE-A1- 3 813 083
- DE-A1- 19 754 167
- DE-A1- 19 836 310
- US-A- 5 975 231

## Beschreibung

Die Erfindung betrifft ein Kraftfahrzeug mit einer Einrichtung zum Erfassen von Hindernissen im maximalen Bewegungsweg eines aus einer geschlossenen Stellung aus der Fahrzeugsilhouette ausschwenkbaren Fahrzeugteils, insbesondere einer Tür oder einer Heckklappe.

Ein derartiges Fahrzeug ist beispielsweise aus EP 1 207 262 A2 bekannt. Über eine geeignete Erfassungseinrichtung, dort einen Sensor, kann ein sich im Bewegungsweg einer schwenkbaren Tür befindliches Objekt erkannt werden. Würde die Tür geöffnet, bestünde eine Kollisionsgefahr, die Tür könnte beschädigt werden. Um dies zu vermeiden besteht bei dem bekannten Kraftfahrzeug die Möglichkeit, bei Erfassen eines Hindernisses die geschlossene Tür über eine Feststelleinrichtung festzustellen, so dass diese nicht geöffnet werden kann. Darüber hinaus kann ein Warnsignal gegeben werden, das den Fahrer über das im Bewegungsweg der Tür befindliche Hindernis informiert.

Wenngleich dadurch natürlich verhindert werden kann, dass es zu einer Kollision kommt, nachdem der Fahrer über die Verriegelung und zusätzlich den Warnton auf ein Hindernis aufmerksam gemacht wird, ist der Umstand, dass die Tür überhaupt nicht geöffnet werden kann, nachdem der Türgriff unwirksam geschaltet wird, für die Insassen problematisch, da zum einen das Eingeschlossensein als beklemmend empfunden, zum anderen unter Umständen ein Defekt vermutet wird.

Die DE 19 836 310 offenbart alle Merkmale des Oberbegriffs des Anspruchs 1.

Der Erfindung liegt damit das Problem zugrunde, ein Kraftfahrzeug anzugeben, das Ein- oder Aussteigen erleichtert.

Zur Lösung dieses Problems ist ein Kraftfahrzeug mit den Merkmalen des Anspruchs 1 vorgesehen.

Beim erfindungsgemäßen Kraftfahrzeug wird in der jeweiligen Situation bereits vor der eigentlichen Bewegung des Teils immer der Öffnungswinkel ermittelt, der ein maximales Aufschwenken des Bauteils, also beispielsweise der Tür, im Hinblick auf die Hindernisposition bezüglich des Fahrzeugs zulässt, ohne dass es zu einer Kollision kommt, wobei hier natürlich ein gewisser Toleranzabstand berücksichtigt werden kann, so dass die maximale Schwenkbewegung bis kurz vor das Hindernis möglich ist, gleichzeitig besteht aufgrund der frühzeitigen Ermittlung des Hindernisses ein hohes Maß an Sicherheit, dass die Feststelleinrichtung auch rechtzeitig greift und sicher verriegelt. Die Ermittlung des Öffnungswinkels kann dabei vorteilhaft stufenlos zwischen der geschlossenen Stellung und dem maximalen Ausschwenkwinkel erfolgen, das heißt, jeder dazwischenliegende Öffnungswinkel kann als möglicher wegbegrenzter Winkel ermittelt werden. Über eine Feststelleinrichtung wird die Öffnungsbewegung bei Erreichen dieses Öffnungswinkels begrenzt. Das heißt, dem Fahrer wird so die Möglichkeit geboten, trotz eines im Bewegungsweg befindlichen Hindernisses die Tür oder die Heckklappe maximal möglich aufzuschwenken, eine Kollision wird vermieden. Die Überwachung hinsichtlich etwaiger Hindernisse erfolgt zweckmäßigerweise unter Verwendung eines beliebigen Erfassungssystems, beispielsweise einer oder mehrerer Kameras, die nach vorne und/oder hinten gerichtet die Umgebung aufnehmen, unter Verwendung von Sensoren wie beispielsweise Radarsensoren, Infrarotsensoren oder Ultraschallsensoren, die im Bereich der Stoßstangen oder der Seiten des Fahrzeugs integriert sind, etc. Zweckmäßigerweise wird dabei auf bereits bestehende Umgebungserfassungssysteme aufgesetzt, wie sie Teil bereits bekannter und häufig integrierter Fahrerassistenzsysteme (z. B. einem Spurwechselassistenzsystem oder einem Abstandshaltesystem oder einem Einparksystem) enthalten sind. Nachdem die Erfassung kontinuierlich erfolgt, kann zu jedem beliebigen Zeitpunkt bereits vor dem tatsächlichen Öffnen der zulässige Öffnungswinkel ermittelt und die Öffnungsbewegung im richtigen Moment begrenzt werden. Infolge der kontinuierlichen Erfassung kann auch während der Öffnungsbewegung korrigierend eingegriffen werden, sollte sich die Position des Hindernisses relativ zum Fahrzeug ändern, der zulässige Öffnungswinkel kann also in jede Richtung nachgeführt werden.

Mit der Wegbegrenzung einer Fahrzeugtür geht zwangsläufig eine Verkleinerung der Fahrzeugöffnung einher, was das Ein- oder Aussteigen verkomplizieren kann. Um dem entgegenzuwirken sieht die Erfindung vor, dass im Falle einer Feststellung einer Tür, insbesondere der Fahrer- oder Beifahrertür, der benachbarte Sitz und/oder das Lenkrad in eine das Aus- oder Einsteigen erleichternde Position automatisch bewegbar ist. Hierzu wird beispielsweise der Sitz aus einer lenkradnahen Position nach hinten in eine lenkradentfernte Position geschoben, wodurch sich die Person leichter in und aus dem Fahrzeug bewegen kann. Auch kann das Lenkrad nach oben geschwenkt und gegebenenfalls zum Armaturenbrett hinbewegt werden, um auch hierdurch mehr Platz zu gewinnen. Selbstverständlich sind hierfür entsprechende Stellelemente wie Elektromotoren etc. vorzusehen und anzusteuern, wie zweckmäßigerweise auch die Einrichtungen zur Warnsignalgabe über die Hinderniserfassungseinrichtung, die natürlich auch die Feststelleinrichtung selbst ansteuert, angesteuert werden. Ist beispielsweise der Fahrer eingestiegen, so nimmt der Sitz und/oder das Lenkrad automatisch wieder die ursprüngliche Position ein, wie sie beispielsweise über den Funksendeschlüssel unmittelbar vorher durch Öffnen der Zentralverriegelung mitgeteilt wurde. Im Übrigen ist die ursprüngliche Sitz- oder Lenkradposition, aus welcher der Sitz/das Lenkrad hinausbewegt wurde, zweckmäßigerweise noch im Steuergerät hinterlegt, so dass diese wieder angefahren werden kann.

Als in seinem Bewegungsweg begrenzbares, weil mit einem anderen Gegenstand möglicherweise kollidierendes Bauteil kann jede Fahrzeugtür wie auch beispielsweise die Heckklappe genannt werden. Denkbar ist aber auch, die Bewegung eines Verdecks, das sich während der Öffnungs- oder Schließbewegung beachtlich aus der Fahrzeugsilhouette nach oben bewegt, zu begrenzen, wenn sich eine Kollisionsgefahr mit einem Hindernis, beispielsweise der Decke einer Tiefgarage oder dergleichen, ergeben würde.

Insgesamt bietet das erfindungsgemäße Kraftfahrzeug dem Fahrer die Möglichkeit, ohne Kollisionsgefahr eine Tür oder Heckklappe oder dergleichen trotz eines im Bewegungsweg befindlichen Hindernisses bewegen zu können.

Das Fahrzeugbauteil ist zweckmäßigerweise unabhängig vom Betriebszustand des Kraftfahrzeugs bei Erfassen einer Öffnungsbewegung feststellbar. Es ist also möglich, das Bauteil, also beispielsweise die Tür sowohl dann wegbegrenzt im Falle einer möglichen Kollision zu öffnen, wenn man im Auto sitzt und aussteigen möchte, egal ob der Motor an oder aus ist, als auch, wenn man nach längerer Zeit das Kraftfahrzeug wieder betreten will, nachdem aufgrund der kontinuierlichen Positionserfassung und Speicherung der Hindernispositionsdaten wie auch der Wegbegrenzung zu jedem Zeitpunkt bekannt ist, dass eine Kollisionsgefahr besteht und infolgedessen die Feststelleinrichtung zum richtigen Zeitpunkt greifen muss. Dadurch, dass kontinuierlich die Hindernisposition bzw. das etwaige Vorhandensein eines Hindernisses erfasst wird, kann folglich auch erkannt werden, wenn das Fahrzeug bewegt wurde, so dass die vormals gespeicherten Hindernis- und Öffnungswinkeldaten nicht mehr gelten.

Wenngleich natürlich eine Person stets die Tür oder Heckklappe manuell bis in die wegbegrenzte zulässige Maximalstellung bewegen kann, sieht eine vorteilhafte Weiterbildung des Erfindungsgedankens vor, dass das in seiner Öffnungsbewegung zu begrenzende Fahrzeugbauteil automatisch zumindest beim Öffnen bis zum Erreichen des wegbegrenzten Öffnungswinkels bewegbar ist. Wird also über die Hinderniserfassungseinrichtung ein solches detektiert, kann beispielsweise auf einen Automatikmodus umgeschalten werden, in welchem - beispielsweise nach vorheriger Informationsausgabe an den Fahrer - die Tür- oder Heckklappenbewegung automatisch durchgeführt wird. Diese automatische Bewegung kann beispielsweise durch Betätigung eines bauteilseitig integrierten Sensors oder eines dem Fahrzeugbauteil zugeordneten Schalters auslösbar sein. Beispielsweise ist es denkbar, innen oder außen im Bereich der Türen entsprechende Berührungssensoren anzubringen, die sofort sensieren, wenn die Tür zum Öffnen berührt wird, wonach der automatische Bewegungsmodus initiiert wird. Auch ist es denkbar, dass zum Initiieren des automatischen Öffnungsvorgangs vom Fahrer aktiv ein entsprechender Taster oder Schalter im Fahrzeug bedient werden muss, er also den Automatikmodus aktiv zuschalten muss. Schließlich ist es denkbar, den Automatikmodus beim Einsteigen beispielsweise über den Funksendeschlüssel, über den auch die Zentralverriegelung gesteuert wird, zu initiieren. Die Hindernisdaten und damit der Öffnungswinkel sind wie beschrieben bereits vor der eigentlichen Bewegung bekannt.

Die Feststelleinrichtung selbst kann beliebiger Natur sein. Es ist der Einsatz einer mechanischen oder elektromechanischen Feststelleinrichtung denkbar, die so ausgelegt ist, dass beispielsweise die Tür oder Heckklappe in jeder beliebigen Winkelstellung festgestellt werden kann. Alternativ kann es sich um eine elektromagnetische Feststelleinrichtung oder eine elektrisch ansteuerbare Feststelleinrichtung handeln. Auch ist es denkbar, die Feststellung durch Verwendung einer magneto-rheologischen Flüssigkeit zu erwirken, wobei die Viskosität der Flüssigkeit durch elektrische Ansteuerung eingestellt werden kann. Diese Flüssigkeit wird beim Öffnen oder Schließen des Teils verdrängt, durch eine entsprechende elektrisch initiierte Viskositätsänderung kann die Viskosität so eingestellt werden, dass eine weitere Bewegung gesperrt ist.

Aus Sicherheitsgründen ist es zweckmäßig, wenn die Feststelleinrichtung zur weiteren Bewegung überdrückbar ist. Wurde die Feststelleinrichtung aktiviert, so ist es möglich, beispielsweise im Gefahrenfall die Tür noch weiter aufzustoßen, auch unter Inkaufnahme einer Kollision, um den Öffnungswinkel noch etwas zu vergrößern, was insbesondere eben dann möglich ist, wenn der als zulässig ermittelte Öffnungswinkel so gewählt ist, dass noch ein gewisser Mindestabstand zum Hindernis eingehalten wird.

Zweckmäßig ist es ferner, wenn bei Erfassung eines Hindernisses vor oder während der begrenzten Öffnungsbewegung ein akustisches und/oder optisches Warnsignal ausgebbar ist. Dies ist vor allem dann zweckmäßig, wenn eine Person aussteigen möchte, da man beim Einsteigen in der Regel ein Hindernis, beispielsweise ein daneben parkendes Auto oder dergleichen unmittelbar erkennt. Die Warnsignalausgabe ist auch dahingehend zweckmäßig, als der Fahrer vor einem sich dem beispielsweise stehenden Fahrzeug nähernden Gegenstand und damit Hindernis gewarnt werden kann, nachdem wie beschrieben die Hinderniserfassung kontinuierlich erfolgt. Nähert sich also beispielsweise ein Kraftfahrzeug oder ein Fahrrad oder ein Fußgänger dem erfindungsgemäßen Kraftfahrzeug, so wird diese Annäherungsbewegung erfasst. In dem Moment, in dem der Fahrer seine Tür öffnet und sich das Hindernis sich im Weg befindet oder in den Bewegungsweg hineinbewegt, kann unmittelbar die Warnsignalgabe erfolgen, so dass der Fahrer die Öffnungsbewegung sofort unterbrechen kann. Natürlich ist auch ein unmittelbares Sperren denkbar.

Der Verstellweg des Sitzes und/oder des Lenkrads kann zweckmäßigerweise in Abhängigkeit des ermittelten wegbegrenzten Öffnungswinkels sein. Je weiter man die Tür aufschwenken kann, desto weniger weit muss der Sitz/das Lenkrad verstellt werden, um ein vereinfachtes Ein- und Aussteigen zu ermöglichen, welches dann schneller vonstatten gehen kann.

Eine vorteilhafte Weiterbildung des Erfindungsgedankens sieht schließlich vor, dass das Kraftfahrzeug insbesondere bei Unterschreiten eines minimalen möglichen wegbegrenzten Öffnungswinkels in Abhängigkeit der Fahrzeugbewegung automatisch in eine Position, in der ein größerer gegebenenfalls wegbegrenzter Öffnungswinkel realisierbar ist, bewegbar ist. Das Fahrzeug rollt oder bewegt sich gegebenenfalls nach automatischem Motorstart oder über entsprechende Elektromotoren gesteuert langsam beispielsweise aus der eingeparkten Stellung, wenn dies nach Lage des oder der Hindernisse möglich ist. Die Bewegung erfolgt unter kontinuierlicher Umgebungserfassung über die Kamerasysteme/Sensorik, zweckmäßigerweise solange, bis entweder ein hinreichend großer, gegebenenfalls vordefinierter Öffnungswinkel erreicht ist, oder bis eben der maximale Öffnungswinkel realisiert werden kann. Gegebenenfalls ist es denkbar, auch eine automatische Lenkbewegung im Rahmen dieser automatischen Fahrzeugbewegung zuzulassen, das heißt, das Kraftfahrzeug manövriert das Fahrzeug selbständig in eine Position, in der ein möglichst weites, gefahrloses Öffnen der Tür/der Heckklappe/des Verdecks möglich ist. Diese automatische Fahrzeugbewegung erfolgt zweckmäßigerweise dann, wenn der Fahrer noch nicht eingestiegen ist, sie kann beispielsweise über den Funksendeschlüssel ausgelöst werden, wenn der Fahrer einsteigen möchte. Über den Funksendeschlüssel wäre beispielsweise auch eine jederzeitige Unterbrechung dieses selbsttätigen Bewegungsprozesses denkbar. Auch ist es möglich, diesen Modus anzuwählen, wenn sich der Fahrer im Auto befindet. Beispielsweise kann er über ein Display oder einen entsprechenden Taster oder dergleichen diesen Automatikmechanismus anwählen, wobei er stets die Steuerungshoheit besitzt und den Automatikbetrieb jederzeit unterbrechen kann.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung einer Ausführungsform eines erfindungsgemäßen Kraftfahrzeugs in einer Seitenansicht,
- Fig. 2: eine Prinzipdarstellung einer Ausführungsform eines erfindungsgemäßen Kraftfahrzeugs in einer Aufsicht, und
- Fig. 3: eine Prinzipdarstellung eines einer Ausführungsform eines erfindungsgemäßen Kraftfahrzeugs in einer eingeparkten Stellung.

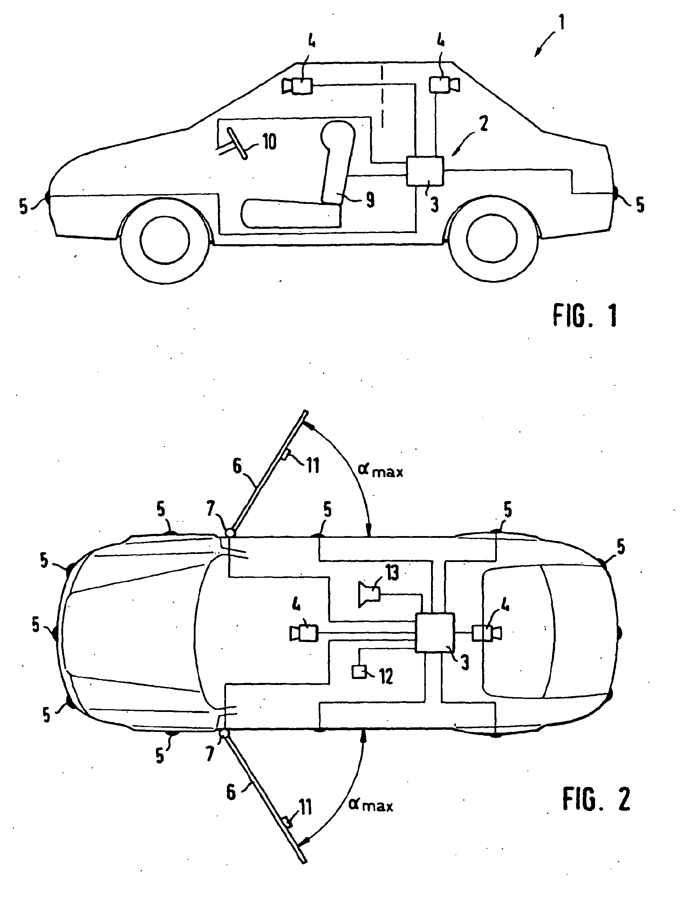

Fig. 1 zeigt ein Kraftfahrzeug 1, umfassend eine Einrichtung 2 zur Erfassung der Fahrzeugumgebung, um hierüber entsprechende, sich im Bewegungsweg der Fahrzeugtüren und/oder der Heckklappe und/oder eines möglichen Verdecks befindliche Hindernisse zu detektieren. Die Einrichtung 2 umfasst ein Steuergerät 3, das mit einer Reihe von Erfassungsmitteln, die unterschiedlicher Art sein können, kommuniziert. In den Fig. 1 und 2 sind zum einen zwei Kameras 4 dargestellt, über die die Fahrzeugumgebung nach vorne und hinten gerichtet erfasst werden kann. Ferner sind eine Vielzahl von Sensoren 5, die im Bereich der vorderen und hinteren Stoßfänger wie auch den Fahrzeugseiten angeordnet sein können, gezeigt. Bei diesen handelt es sich beispielsweise um Radarsensoren. Auch diese kommunizieren allesamt mit dem Steuergerät 3. Das Steuergerät 3 ist in der Lage, bei Erfassung eines etwaigen, sich im gezeigten Ausführungsbeispiel nach Fig. 2 im Bewegungsweg der Türen 6 befindlichen Hindernisses in Abhängigkeit der Positionsdaten des Hindernisses relativ zum Fahrzeug den Öffnungswinkel zu berechnen, um den die Tür 6 aufgeschwenkt werden kann, ohne dass es zu einer Hinderniskollision kommt. Jede Tür ist um einen maximalen Schwenkwinkel αₘₐₓ aufschwenkbar, wie in Fig. 2 gezeigt. Ergibt sich, dass dieser maximale Öffnungswinkel nicht erreicht werden kann, da eine Kollision mit einem Hindernis droht, wird der zulässige Öffnungswinkel, bei dem eine Kollision gerade nicht erfolgt, seitens dem Steuergerät 3 ermittelt. Der Öffnungswinkel errechnet sich anhand der Geometriedaten der jeweiligen Tür bzw. der Heckklappe bzw. des Verdecks und den Positionsdaten des Hindernisses.

Jeder Fahrzeugtür 6 - ausgehend vom Beispiel in Fig. 2 - ist eine Feststelleinrichtung 7 zugeordnet, die ebenfalls über das Steuergerät 3 angesteuert werden kann, und die derart ausgebildet ist, dass die Türposition in jeder beliebigen Winkellage zwischen der geschlossenen Stellung (0°) und der maximal offenen Stellung (αₘₐₓ) festgestellt werden kann, der Bewegungsweg kann also aktiv begrenzt werden. Ermittelt nun das Steuergerät 3, dass beispielsweise die Fahrertür nur bis zu einem gewissen Öffnungswinkel α < αₘₐₓ geöffnet werden kann, so wird - beispielsweise automatisch über eine entsprechende Bewegungsmechanik im Bereich der Türanlenkung (die nicht näher dargestellt ist, jedoch ebenfalls über das Steuergerät 3 angesteuert werden kann) - die Tür 6 automatisch geöffnet, bis sie den ermittelten zulässigen Öffnungswinkel einnimmt, wonach die Feststellung der Türposition über die Ansteuerung der Feststelleinrichtung 7 erfolgt, die Tür wird also blockiert. Selbstverständlich kann die Feststelleinrichtung 7 auch zum automatischen Öffnen der Tür angesteuert werden. Der Fahrer kann nun also problemlos ein- oder aussteigen, nachdem die Tür festgestellt ist und eine Kollision vermieden wird. Diese Feststellung kann im Gefahrenfall überdrückt werden.

Zur Erfassung einer gewünschten Türbewegung, die ein automatisches Öffnen (und gegebenenfalls auch Schließen) auslöst, kann beispielsweise an jeder Tür ein entsprechender Berührungssensor 11 vorgesehen sein, den der Fahrer beispielsweise automatisch dann, wenn er den Türgriff zum Öffnen oder Schließen greift, berührt, vorgesehen sein. Alternativ ist es auch denkbar, im Fahrzeug einen Schalter 12 anzuordnen, den der Fahrer betätigen muss, wenn er den automatischen Öffnungsbetrieb auslösen möchte.

Wurde eine nötige Wegbegrenzung erfasst, so kann dem Fahrer, um ihn hierüber zu informieren, ein optisches oder akustisches Warnsignal, dargestellt über das Ausgabemittel 13 (Lautsprecher, Bildschirm, Warnlampe etc.) gegeben werden.

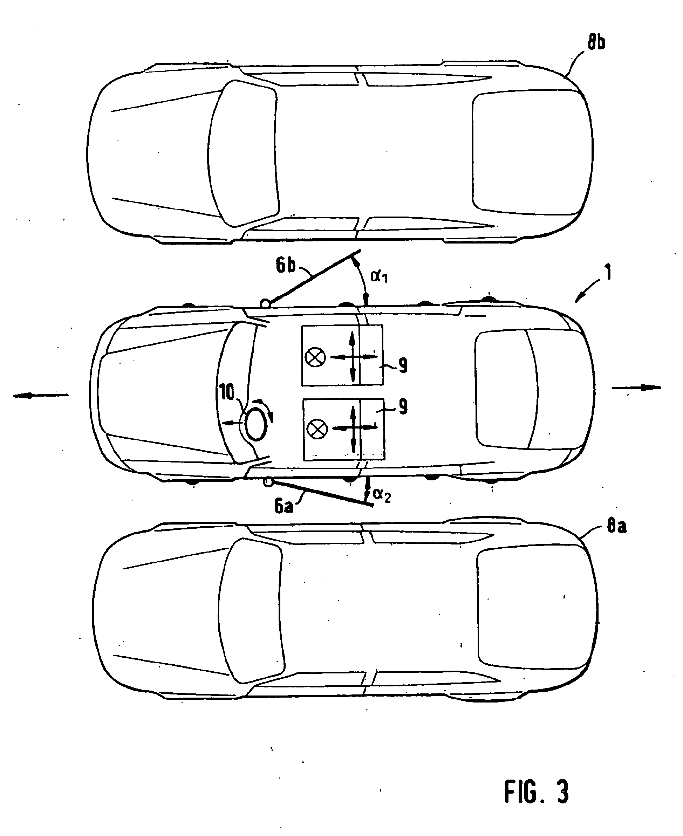

Fig. 3 zeigt eine typische, alltägliche Situation, bei dem das Kraftfahrzeug 1 von zwei seitlich parkenden Fahrzeugen 8a, 8b eingeparkt ist.

Während das Fahrzeug 8b etwas weiter zum Kraftfahrzeug 1 beabstandet ist, steht das Kraftfahrzeug 8a sehr nahe dazu. Wie Fig. 3 zeigt, kann die Beifahrertür 6b um einen Winkel α₁ geöffnet werden, ohne dass es zu einer Kollision kommt. Dieser Winkel α₁ wird, nachdem die Fahrzeugumgebung und mithin auch das Fahrzeug 8b in seiner Position ermittelt wurde, vom Steuergerät 3 erfasst werden. Wird die Beifahrertür 6b um den Winkel α₁ aufgeschwenkt, wird sie festgestellt. Um das Ein- oder Aussteigen zu erleichtern ist es erfindungsgemäß möglich, den jeweiligen der Tür benachbarten Sitz 9 über geeignete Verstellmotoren in eine Position zu bewegen, in der das Ein- oder Aussteigen erleichtert ist. Wie in Fig. 3 dargestellt ist es möglich, den Sitz 9 längs der Fahrzeuglängsachse oder quer dazu zu bewegen (dargestellt durch die sich kreuzenden Doppelpfeile), oder in seiner Höhe zu verändern (dargestellt durch das Kreuzsymbol). Zur Erleichterung wird er zweckmäßigerweise in eine rückwärtige Position, also vom Armaturenbrett beabstandete Position bewegt, wie auch - sofern möglich - zum Fahrzeuginneren hin. Er wird ferner etwas angehoben, wodurch das Aus- oder Einsteigen ebenfalls erleichtert wird.

In entsprechender Weise kann auch das Lenkrad 10 zur Vergrößerung des Ausstiegraums bewegt werden. Es ist denkbar, dieses wie durch den gebogenen Doppelpfeil dargestellt zu verschwenken oder aber weiter zum Armaturenbrett hinzubewegen, wie durch den geraden Doppelpfeil dargestellt ist. Sowohl der verstellte Sitz wie auch das verstellte Lenkrad nehmen, wenn der Fahrer wieder Platz genommen hat oder ausgestiegen ist (was beispielsweise über entsprechende Gewichtssensoren im Sitz erfasst werden kann, oder wenn die Fahrzeugtür geschlossen ist, was ebenfalls über eine Sensorik erfasst werden kann etc.) wieder die Ausgangspositionen ein. Die Ansteuerung des Sitzes/ des Lenkrads erfolgt ebenfalls über das Steuergerät 3, das entsprechende Stellglieder wie Elektromotoren etc. ansteuert.

Während im Situationsbeispiel gemäß Fig. 3 der Beifahrer die Beifahrertür 6b noch hinreichend weit öffnen und schließen kann, um bequem ein- und aussteigen zu können, ist dies aufgrund des sehr eng parkenden Fahrzeugs 8a für den Fahrer nicht möglich. Aufgrund der Hindernisdaten errechnet das Steuergerät 3, dass die Fahrertür 6a lediglich um den Winkel α₂ geöffnet werden kann, der nur einen sehr schmalen Ein- und Ausstiegsschlitz zulässt. Ist dieser Winkel α₂ kleiner als ein Schwellwinkel αₘᵢₙ, so ist es möglich, dass das Steuergerät 3 das Kraftfahrzeug 1 in einem Automatikmodus selbsttätig bewegt, das heißt, es werden beispielsweise Elektromotoren angesteuert, über die das Fahrzeug selbsttätig nach vorne und hinten verfährt, je nachdem, wie die Umgebungssituation dies zulässt. Das Auto wird also automatisch und selbsttätig aus der eingeparkten Stellung etwas herausmanövriert, und zwar in eine Position, die ein Öffnen der Fahrertür 6a um einen Winkel α > αₘᵢₙ zulässt, bevorzugt in eine Position, in der die Fahrertür 6a vollständig geöffnet werden kann. Dieser Automatikmodus wird vom Fahrer zweckmäßigerweise dann angewählt, wenn er selbst nicht im Fahrzeug ist. Dies kann beispielsweise über den Funksendeschlüssel, gegebenenfalls auch über ein Handy oder ein sonstiges Steuerelement, angesteuert wie auch zu jedem Zeitpunkt unterbrochen werden. Das Steuergerät 3 kann dabei zur verbesserten Fahrzeugmanövrierung auch die Lenkung entsprechend ansteuern, wobei die Fahrzeugsteuerung natürlich stets in Abhängigkeit der kontinuierlich erfassten Fahrzeugumfeldänderungen erfolgt.

Abschließend ist festzuhalten, dass das Steuergerät 3 in der Lage ist, die Tür- oder Heckklappenfeststellung zu jedem beliebigen Zeitpunkt unabhängig von der Betriebsart des Fahrzeugs zu erwirken. Wird das Fahrzeug beispielsweise am Abend relativ eng neben einem anderen Fahrzeug eingeparkt, und greift der Feststellmechanismus, wenn der Fahrer aussteigt, so muss gewährleistet sein, dass beim Einsteigen am nächsten Tag, wenn sich entweder die Hindernissituation nicht geändert hat oder so geändert hat, dass nach wie vor eine Wegbegrenzung, wenngleich gegebenenfalls auch eine andere, erforderlich ist, eine solche auch erreicht werden kann. Beispielsweise wird, sobald der Fahrer z.B. über den Funksendeschlüssel die Zentralverriegelung betätigt, die Hinderniserfassung automatisch aktiviert, so dass unmittelbar eine Hindernisaufnahme erfolgt und eine mögliche Wegbegrenzung ermittelt wird.

## Patentansprüche

1. Kraftfahrzeug mit einer Einrichtung zum Erfassen von Hindernissen im maximalen Bewegungsweg eines aus einer geschlossenen Stellung aus der Fahrzeugsilhouette ausschwenkbaren Fahrzeugteils, insbesondere einer Tür oder einer Heckklappe, und mit einem Steuergerät (3), wobei bei Erfassen eines Hindernisses (8a, 8b) in Abhängigkeit der Position des Hindernisses (8a, 8b) bezüglich des Fahrzeugs (1) ein Öffnungswinkel (α) ermittelbar ist, bei dem keine Kollision erfolgt, und wobei eine über das Steuergerät (3) angesteuerte Feststelleinrichtung (7) zum Begrenzen der Öffnungsbewegung des Fahrzeugteils (6, 6a, 6b) bei Erreichen des ermittelten Öffnungswinkels (α) vorgesehen ist,
**dadurch gekennzeichnet,**
**dass** im Falle einer Feststellung einer Tür (6) der benachbarte Sitz (9) und/oder das Lenkrad (10) automatisch mit geeigneten Verstellmotoren und über das Steuergerät (3) angesteuert in eine das Aus- oder Einsteigen erleichternde Position bewegbar ist.

2. Kraftfahrzeug nach Anspruch 1,
**dadurch gekennzeichnet,**
**dass** das Fahrzeugteil (6, 6a, 6b) unabhängig vom Betriebszustand des Kraftfahrzeugs (1) bei Erfassen einer Öffnungsbewegung feststellbar ist.

3. Kraftfahrzeug nach Anspruch 1 oder 2,
**dadurch gekennzeichnet,**
**dass** das in seiner Öffnungsbewegung zu begrenzende Fahrzeugteil (6, 6a, 6b) automatisch zumindest zum Öffnen bis zum Erreichen des wegbegrenzten Öffnungswinkels (α) bewegbar ist.

4. Kraftfahrzeug nach Anspruch 3,
**dadurch gekennzeichnet,**
**dass** die automatische Bewegung durch Betätigung eines bauteilseitig integrierten Sensors (11) oder eines dem Fahrzeugteil (6, 6a, 6b) zugeordneten Schalters (12) auslösbar ist.

5. Kraftfahrzeug nach einem der vorangehenden Ansprüche,
**dadurch gekennzeichnet,**
**dass** die Feststelleinrichtung (7) eine mechanische oder elektromechanische Feststelleinrichtung oder eine die Feststellung durch eine elektrisch angesteuerte Veränderung ihrer Viskosität bewirkende und während der Bewegung bewegte rheologische Flüssigkeit ist

6. Kraftfahrzeug nach einem der vorangehenden Ansprüche,
**dadurch gekennzeichnet,**
**dass** die Feststelleinrichtung (7) zur weiteren Bewegung überdrückbar ist.

7. Kraftfahrzeug nach einem der vorangehenden Ansprüche,
**dadurch gekennzeichnet,**
**dass** bei Erfassung eines Hindernisses vor oder während der wegbegrenzten Öffnungsbewegung ein akustisches und/oder optisches Warnsignal, gegebenenfalls in Abhängigkeit des zu Öffnenden Fahrzeugteils, ausgebbar ist.

8. Kraftfahrzeug nach einem der vorangehenden Ansprüche,
**dadurch gekennzeichnet,**
**dass** die Tür die Fahrer- oder die Beifahrertür (6a, 6b) ist.

9. Kraftfahrzeug nach einem der vorangehenden Ansprüche,
**dadurch gekennzeichnet,**
**dass** der Verstellweg des Sitzes (9) und/oder des Lenkrads (10) in Abhängigkeit des ermittelten wegbegrenzten Öffnungswinkels (α) ist.

10. Kraftfahrzeug nach einem der vorangehenden Ansprüche, **dadurch gekennzeichnet, dass** es insbesondere bei Unterschreiten eines minimalen möglichen wegbegrenzten Öffnungswinkels (αₘᵢₙ) in Abhängigkeit der Fahrzeugumgebung automatisch in eine Position, in der ein größerer gegebenenfalls wegbegrenzter Öffnungswinkel (α) realisierbar ist, bewegbar ist.

## Claims

1. Motor vehicle having a device for sensing obstacles in the maximum movement path of a vehicle component, in particular a door or a tailgate, which can pivot out of the silhouette of the vehicle from a closed position, and having a control unit (3), wherein when an obstacle (8a, 8b) is sensed an angle (α) of aperture at which no collision occurs can be determined as a function of the position of the obstacle (8a, 8b) in relation to the vehicle (1), and wherein a securing device (7), which is operated via the control unit (3), is provided for limiting the opening movement of the vehicle component (6, 6a, 6b) when the determined angle (α) of aperture is reached,
**characterized**
**in that**, when a door (6) is secured, the adjacent seat (9) and/or the steering wheel (10) can be moved automatically, actuated using suitable adjustment motors and by means of the control unit (3), into a position which facilitates entering the vehicle or exiting the vehicle.

2. Motor vehicle according to Claim 1,
**characterized**
**in that** the vehicle component (6, 6a, 6b) can be secured independently of the operating state of the motor vehicle (1) when an opening movement is sensed.

3. Motor vehicle according to Claim 1 or 2,
**characterized**
**in that** the vehicle component (6, 6a, 6b) which is to be limited in its opening movement can be moved automatically to open at least until the travel-limited angle (α) of aperture is reached.

4. Motor vehicle according to Claim 3,
**characterized**
**in that** the automatic movement can be triggered by activating a sensor (11) which is integrated into a component, or a switch (12) which is assigned to the vehicle component (6, 6a, 6b).

5. Motor vehicle according to one of the preceding claims,
**characterized**
**in that** the securing device (7) is a mechanical or electromechanical securing device or a rheological fluid which brings about the securing process by means of an electrically actuated change in its viscosity, and which is moved during the movement.

6. Motor vehicle according to one of the preceding claims,
**characterized**
**in that** the securing device (7) can be bypassed for the purpose of further movement.

7. Motor vehicle according to one of the preceding claims,
**characterized**
**in that**, when an obstacle is sensed before or during the travel-limited opening movement, an audible and/or a visual warning signal can be output, if appropriate as a function of the vehicle component which is to be opened.

8. Motor vehicle according to one of the preceding claims,
**characterized**
**in that** the door is the driver's or front seat passenger's door (6a, 6b).

9. Motor vehicle according to one of the preceding claims,
**characterized**
**in that** the adjustment path of the seat (9) and/or of the steering wheel (10) is dependent on the determined, travel-limited angle (α) of aperture.

10. Motor vehicle according to one of the preceding claims,
**characterized**
**in that** said motor vehicle can be moved automatically into a position in which a relatively large, if appropriate travel-limited angle (α) of aperture can be implemented, as a function of the vehicle surroundings, in particular when a minimum possible travel-limited angle (αₘᵢₙ) of aperture is undershot.

## Revendications

1. Véhicule automobile comprenant un système pour détecter des obstacles dans une plage de mouvement maximale d'une partie du véhicule pouvant pivoter hors d'une position fermée hors du contour du véhicule, notamment d'une porte ou d'un hayon arrière, et comprenant un appareil de commande (3), dans lequel, lors de la détection d'un obstacle (8a, 8b) en fonction de la position de l'obstacle (8a, 8b) par rapport au véhicule (1), un angle d'ouverture (α) peut être déterminé, auquel aucune collision n'a lieu, et dans lequel un système de fixation (7) commandé par le biais de l'appareil de commande (3) est prévu pour limiter le mouvement d'ouverture de la partie de véhicule (6, 6a, 6b) une fois atteint l'angle d'ouverture déterminé (α),
**caractérisé en ce que**
dans le cas d'une fixation d'une porte (6), le siège adjacent (9) et/ou le volant de direction (10) peuvent être déplacés automatiquement avec des moteurs de réglage appropriés et de manière commandée par le biais de l'appareil de commande (3), dans une position facilitant la sortie ou l'entrée.

2. Véhicule automobile selon la revendication 1,
**caractérisé en ce que**
la partie de véhicule (6, 6a, 6b) peut être fixée indépendamment de l'état de fonctionnement du véhicule automobile (1) lors de la détection d'un mouvement d'ouverture.

3. Véhicule automobile selon la revendication 1 ou 2,
**caractérisé en ce que**
la partie de véhicule (6, 6a, 6b) à limiter dans son mouvement d'ouverture peut être déplacée automatiquement au moins pour l'ouverture jusqu'à atteindre l'angle d'ouverture (α) de plage limitée.

4. Véhicule automobile selon la revendication 3,
**caractérisé en ce que**
le mouvement automatique peut être déclenché par l'actionnement d'un capteur (11) intégré du côté des composants, ou d'un commutateur (12) associé à la partie de véhicule (6, 6a, 6b).

5. Véhicule automobile selon l'une quelconque des revendications précédentes,
**caractérisé en ce que**
le système de fixation (7) est un système de fixation mécanique ou électromécanique ou est un liquide rhéologique provoquant la fixation suite à une variation commandée électriquement de sa viscosité et qui est déplacé pendant le mouvement.

6. Véhicule automobile selon l'une quelconque des revendications précédentes,
**caractérisé en ce que**
le système de fixation (7) peut être soumis à une surpression pour effectuer un mouvement supplémentaire.

7. Véhicule automobile selon l'une quelconque des revendications précédentes,
**caractérisé en ce que**
lors de la détection d'un obstacle avant ou pendant le mouvement d'ouverture de plage limitée, un signal d'avertissement acoustique et/ou optique peut être émis, éventuellement en fonction de la partie de véhicule à ouvrir.

8. Véhicule automobile selon l'une quelconque des revendications précédentes,
**caractérisé en ce que**
la porte est la porte du conducteur ou du passager (6a, 6b).

9. Véhicule automobile selon l'une quelconque des revendications précédentes,
**caractérisé en ce que**
la plage de réglage du siège (9) et/ou du volant de direction (10) est fonction de l'angle d'ouverture (α) de plage limitée déterminé.

10. Véhicule automobile selon l'une quelconque des revendications précédentes, **caractérisé en ce qu'**il peut être déplacé, notamment si un angle d'ouverture (αₘᵢₙ) de plage limitée minimal possible n'est pas atteint, en fonction de l'environnement du véhicule, automatiquement dans une position dans laquelle un angle d'ouverture supérieur (α), éventuellement de plage limitée, peut être obtenu.
